# EUROPÄISCHE PATENTSCHRIFT

(11) **EP 3 981 717 B1**
(45) Veröffentlichungstag und Bekanntmachung des Hinweises auf die Patenterteilung: **11.11.2026**
(21) Anmeldenummer: 21191861.0
(22) Anmeldetag: 18.08.2021
(51) Int. Cl.: B65G 65/00, B62B 3/10, B66F 9/00

(54) **VERFAHREN ZUM ÜBERGEBEN EINER MEHRZAHL VON OBJEKTEN ZWISCHEN EINEM MOBILEN TRANSPORTFAHRZEUG UND EINEM STATIONÄREN REGAL**
METHOD FOR TRANSFERRING A PLURALITY OF OBJECTS BETWEEN A MOBILE TRANSPORT VEHICLE AND A STATIONARY SHELF
PROCÉDÉ DE TRANSFERT D'UNE PLURIÉTÉ D'OBJETS ENTRE UN VÉHICULE DE TRANSPORT MOBILE ET UN RAYONNAGE FIXE

(30) Priorität: 07.10.2020 DE 102020126248
(43) Veröffentlichungstag der Anmeldung: 13.04.2022
(73) Patentinhaber: Jungheinrich Aktiengesellschaft, 22047 Hamburg (DE)
(72) Erfinder: SCHWAIGER, Martin, 82490 Farchant (DE)
(74) Vertreter: Weickmann & Weickmann PartmbB

(56) Entgegenhaltungen:
- EP-A1- 0 169 156
- EP-A1- 3 192 616
- CN-A- 106 167 236
- DE-A1- 102018 106 458
- DE-U1- 202018 101 774
- US-A1- 2017 334 644
- US-A1- 2018 096 299

## Beschreibung

Die vorliegende Erfindung betrifft ein Verfahren zum Übergeben einer Mehrzahl von Objekten zwischen einem mobilen Transportfahrzeug und einem stationären Regal in einem Lagerhaltungssystem.

Es ist ein üblicher Anwendungsfall in Logistikanlagen oder auch Verkaufseinrichtungen, durch ein mobiles Transportfahrzeug mehrere Objekte, insbesondere Behälter, in einem Aufnahmebereich, beispielsweise einem Lager, aufzunehmen und diese dann an unterschiedliche Orte oder Abgabebereiche zu verbringen, an welchen sie im Einzelnen benötigt werden. Zur Verbesserung der Auslastung des Transportfahrzeugs werden hierbei in dem Beispiel von Behältern bei der Abgabe von vollen Behältern wiederum leere Behälter eingesammelt, sodass bei der Rückkehr des Transportfahrzeugs in den Aufnahmebereich eine Mehrzahl von leeren Behältern abzugeben ist. Dementsprechend umfasst in diesem Beispiel das Anforderungsprofil derartiger Transportfahrzeuge sowohl das selektive Handhaben einzelner Objekte in Abgabebereichen als auch ein im Optimalfall parallel stattfindendes Aufnehmen oder Abgeben mehrerer Objekte.

Da bei bisher im Einsatz befindlichen Transportfahrzeugen die Ausgabe mehrerer Objekte entweder einzeln manuell oder sequentiell einzeln durch einen entsprechenden Roboter erfolgt, besteht hier noch Potential für Optimierungen durch eine Parallelisierung der Aufnahme oder Abgabe mehrerer Objekte.

Zwar sind Transportfahrzeuge in Form sogenannter mobiler Regale bekannt, in welchen eine Mehrzahl von gleichen oder ähnlichen Objekten in entsprechenden Regalen auf fahrbaren Plattformen abgelegt werden können, diese werden jedoch in der Regel im Bereich Ware-zu-Person oder bei der Abgabe von Objekten an automatische Fördereinrichtungen eingesetzt, wo keine Maßnahmen zu einer erhöhten Automatisierung getroffen sind. Insbesondere sind derartige Systeme auf manuelle oder automatisierte aber lediglich sequentiell durchgeführte Wechselvorgänge angewiesen, sodass eine schnelle Übernahme und Abgabe einer Mehrzahl von Behältern in einem Übergabebereich ("Staging-Bereich") noch nicht effizient gelöst worden ist.

Auch auf etwas entfernteren technischen Gebieten werden bereits mobile Regale eingesetzt, so zeigt beispielsweise die DE 42 02 243 A1 eine entsprechende Lösung aus dem Bereich der Regalbediengeräte, in welcher ein Zwischenspeicher mittels eines höhenverstellbaren Teleskoptischs bestückt werden kann und demzufolge als mobiles Regal wirkt. Auch diese Vorrichtung bietet jedoch keine Möglichkeit zur Parallelisierung von Entnahmevorgängen einer Mehrzahl von Objekten und ist bauartbedingt auf den Betrieb zusammen mit Regalreihen festgelegt.

Ferner lehrt die WO 2018/147953 A1 ein mobiles Transportfahrzeug mit einem Zwischenspeicher und einer Vorrichtung zur Bestückung dieses Zwischenspeichers, wobei jedoch ebenfalls keine Parallelisierung einer Übergabe mehrerer Objekte vorgesehen ist.

Die WO 2021/179993 A1, die unter Artikel 54(3) EPÜ fällt, offenbart ein Verfahren zum Übergeben einer Mehrzahl von Objekten zwischen einem mobilen Transportfahrzeug und einem stationären Regal in einem Lagerhaltungssystem. Das mobile Transportfahrzeug umfasst jedoch keine Hubeinheit, die eingerichtet ist, einen ganzen Regalabschnitt des mobilen Transportfahrzeugs gegenüber Rädern des mobilen Transportfahrzeugs in vertikaler Richtung zu verlagern und das Lagerhaltungssystem umfasst auch keine Hubeinheit, die dazu eingerichtet ist, das stationäre Regal wenigstens abschnittsweise in vertikaler Richtung zu verlagern.

Weiterhin soll auf die US 2017/0 334 644 A1 verwiesen sein, welche ein Verfahren nach dem Oberbegriff des Anspruchs 1 offenbart.

Es ist somit die Aufgabe der vorliegenden Erfindung, ein Verfahren bereitzustellen, welches neben einem Transport einer Mehrzahl von gleichen oder ähnlichen Objekten eine parallele Übergabe einer Mehrzahl der entsprechenden Objekte ermöglicht.

Zu diesem Zweck umfasst das in dem erfindungsgemäßen Verfahren eingesetzte mobile Transportfahrzeug einen Fahrzeugkörper mit einer Längs- und einer Breitenrichtung, welcher mit einer Mehrzahl von Rädern bereitgestellt ist, mittels welcher sich das Transportfahrzeug auf einem Fahruntergrund bewegen kann, wobei die Haupt-Fortbewegungsrichtung des Transportfahrzeugs der Längsrichtung des Fahrzeugkörpers entspricht, ein Regalabschnitt mit einer Mehrzahl von Objektträgern, welcher dazu eingerichtet ist, eine Mehrzahl gleicher oder ähnlicher Objekte aufzunehmen, wobei der Regalabschnitt derart angeordnet oder anordenbar ist, dass eine erste Zugangsöffnung zum Einsetzen und Entnehmen der Objekte in Richtung der Vorderseite des Transportfahrzeugs auf die Längsrichtung bezogen weist, und eine Handhabungseinheit, welche dazu eingerichtet ist, selektiv ein einzelnes beliebiges Objekt aus dem Regalabschnitt zu übernehmen und welche hierzu bezüglich der Längsrichtung des Transportfahrzeugs hinter dem Regalabschnitt angeordnet ist, wobei der Regalabschnitt eine weitere, der Handhabungseinheit zugängliche Zugangsöffnung gegenüber der ersten Zugangsöffnung aufweist und/oder der Regalabschnitt derart anordenbar ist, dass die erste Zugangsöffnung der Handhabungseinheit zugänglich wird.

Dementsprechend ermöglicht die Ausgestaltung des Regalabschnitts des Transportfahrzeugs sowohl einen Zugriff auf eine Mehrzahl oder sämtliche der Objekte durch die erste Zugangsöffnung in Richtung der Vorderseite des Transportfahrzeugs, während andererseits durch das Vorsehen der Handhabungseinheit sichergestellt ist, dass auch selektiv jedes einzelne beliebige der Objekte aus dem Regalabschnitt übernommen werden kann. Hierbei können die Objektträger als Regalböden, aber auch in Form von Schienen oder Haken oder ganz allgemein so ausgebildet sein, dass sie zum Einhängen oder Abstellen entsprechender Objekte geeignet sind. Dementsprechend eignet sich dieses System insbesondere für Anwendungsfälle, in welchen an unterschiedlichen Übergabepunkten in einer Logistikeinrichtung entweder jeweils ein einzelnes der Objekte oder sämtliche Objekte auf einmal zu übergeben sind. Ein praktisches Beispiel hierfür könnte ein Supermarkt sein, in welchem in einem Staging-Bereich eine Mehrzahl von mit einzelnen Waren bestückten Kleinladungsträgern in den Regalabschnitt aufgenommen werden, welche dann an unterschiedlichen Stationen selektiv abgesetzt werden, wobei jeweils ein gefüllter Kleinladungsträger durch einen leeren Kleinladungsträger ersetzt wird.

Nachdem in dem beispielhaften Anwendungsfall das mobile Transportfahrzeug dann sämtliche Stationen abgefahren hat und demzufolge sämtliche vollen Kleinladungsträger durch entsprechende leere Kleinladungsträger ersetzt worden sind, kann es zu dem Staging-Bereich zurückkehren und dort sämtliche leeren Kleinladungsträger auf einmal in einer zeitsparenden Weise abgeben und entsprechend neu bestückt werden.

Da die Handhabungseinheit auf die Längsrichtung des Transportfahrzeugs bezogen hinter dem Regalabschnitt angeordnet ist, kann ggf. ein seitlicher Zugriff auf durch die Handhabungseinheit übernommene Objekte denkbar sein, wodurch diese wiederum von der Handhabungseinheit und damit dem mobilen Transportfahrzeug als Ganzes übernommen werden können. Zu diesem Zweck kann die Handhabungseinheit beispielsweise ein Hubgerüst umfassen, welchem ein Lastaufnahmemittel in einer verlagerbaren Weise zugeordnet ist. Eine derart ausgebildete Handhabungseinheit kann dann die einzelnen in dem Regalabschnitt angeordneten Objekte in der beispielsweise durch Gabelstapler oder Regalbediengeräte bekannten Weise in dem Regalabschnitt einlagern bzw. aus diesem auslagern.

Um dann wiederum die Übernahme bzw. Übergabe der Objekte an das Lastaufnahmemittel zu vereinfachen, kann dieses ferner dazu eingerichtet sein, eine Bewegung in Richtung der Breitenrichtung des Transportfahrzeugs ausführen zu können. Somit kann in der Weise eines Seitenschubgeräts ein momentan von der Handhabungseinheit getragenes Objekt aus der Draufsichtskontur des Transportfahrzeugs heraus verschoben werden und dort entweder manuell oder durch geeignete externe Komponenten übernommen werden.

Alternativ oder zusätzlich kann die Handhabungseinheit jedoch auch einen Roboter mit mehreren Freiheitsgraden umfassen, welcher durch seine erhöhte Beweglichkeit flexibler als ein einfaches Lastaufnahmemittel in Form einer Gabel sein kann, jedoch in seiner Anschaffung teurer und in seinem Betrieb komplizierter und gegebenenfalls auch fehleranfälliger ist.

Zum Erlauben eines Zugriffs auf den Regalabschnitt sowohl an der Vorderseite des Transportfahrzeugs als auch an der gegenüberliegenden Seite durch die Handhabungseinheit, kann alternativ zu einem Vorsehen von zwei einander gegenüberliegenden Zugangsöffnungen, die ein räumlich festes Verbinden des Regalabschnitts mit dem Fahrzeugkörper ermöglichen, der Regelabschnitt auch gegenüber dem Fahrzeugkörper um wenigstens 180° drehbar angeordnet und durch entsprechend gesteuerte Antriebsmittel zu dieser Drehung antreibbar sein. Somit würde je nachdem, ob momentan eine Entnahme oder eine Eingabe von lediglich einem Objekt oder einer Mehrzahl von Objekten vorgesehen ist, der Regalabschnitt so gegenüber dem Fahrzeugkörper verdreht werden, dass die erste Zugangsöffnung entweder in Richtung der Vorderseite oder in Richtung der Hinterseite des Transportfahrzeugs weisen würde. In einer Variante hiervon, in welcher die Handhabungseinheit auch auf die erste Zugangsöffnung des Regalabschnitts zugreifen kann, wenn diese beispielsweise in Breitenrichtung des Fahrzeugs orientiert ist, also insbesondere in Ausführungsformen, in welchen ein Roboterarm mit einer hohen Beweglichkeit in der Handhabungseinheit zum Einsatz kommt, könnte selbstverständlich auch eine Drehung des Regalabschnitts um weniger als 180° ausreichend sein, beispielsweise also um 90°.

Während der Regalabschnitt prinzipiell in unterschiedlichen Gestaltungen vorliegen kann, solange im Zusammenwirken damit die weiteren an der Handhabung der darin eingelagerten oder einzulagernden Objekte beteiligten Komponenten hierzu in der Lage sind, so kann in einer besonders einfachen Ausführungsform der Regalabschnitt mehrere gleich voneinander beabstandete Objektträger umfassen, welche beispielsweise zum Aufnehmen von Kleinladungsträgern wie Kartons, Kisten oder Tabletts eingerichtet sein können. Alternativ könnten die Objektträger in einer Variante hiervon selbstverständlich auch unterschiedlich beabstandet sein, beispielsweise in einem unteren Bereich des Regalabschnitts mit größeren Abständen und in einem oberen Bereich mit kleineren Abschnitten, so dass größere Objekte an tieferen Positionen vorgehalten werden können. Ferner könnten Objekte auch frei auf entsprechenden Objektträgern liegen und durch eine Objekterkennung lokalisiert und gegriffen werden. Hierzu müssten dann der Objektträger und die die Objekte aufnehmende Einheit kammartig ausgeprägt sein.

Gemäß einer ersten Alternative der Erfindung umfasst das mobile Transportfahrzeug eine Hubeinheit, welche dazu eingerichtet ist, den Regalabschnitt gegenüber den Rädern in vertikaler Richtung zu verlagern. Auf diese Weise kann beispielsweise im Zusammenhang mit dem weiter unten noch vorgestellten stationären Regal ein Einhängen oder Abstellen der Objekte an geeigneten Objektträgern, beispielsweise Regalböden, des externen stationären Regals mithilfe der Hubeinheit durchgeführt werden, indem der Regalabschnitt als Ganzes gegenüber dem Untergrund vertikal verlagert wird, sodass dementsprechend auch eine Verlagerung der abzustellenden Objekte gegenüber dem externen Regal vorgenommen wird und diese dann an geeignete Objektträger übergeben werden können.

Insbesondere in derartigen Ausführungsformen kann es ferner vorteilhaft sein, wenn das mobile Transportfahrzeug wenigstens eine Sensoreinheit umfasst, welche dazu eingerichtet ist, die Umgebung des Transportfahrzeugs zu erfassen, insbesondere im Bereich vor dem Regalabschnitt bezüglich der Längsrichtung. Abgesehen von einer Verwendung einer derartigen Sensoreinheit zur Steuerung, Regelung oder Kontrolle von Übergabevorgängen, kann diese selbstverständlich jedoch auch alternativ oder zusätzlich für eine Hinderniserkennung oder andere Erfassungsvorgänge der Umgebung des Transportfahrzeugs eingesetzt werden und beispielsweise einen optischen oder auf Ultraschall basierenden Sensor umfassen.

Wenngleich das mobile Transportfahrzeug in verschiedenen Ausführungsformen einen unterschiedlichen Autonomiegrad aufweisen kann, beispielsweise manuell bewegt werden könnte, jedoch auf automatisierte Ein- und Auslagerungsabläufe zurückgreifen könnte, so kann es in einer besonders hochintegrierten Ausführungsform eine Steuereinheit umfassen, welche dazu eingerichtet ist, ein auf die Räder wirkendes Antriebssystem des Transportfahrzeugs für einen automatischen oder autonomen Betrieb anzusteuern, und welche hierzu mit einer Kommunikationseinheit betriebsmäßig gekoppelt ist, welche dazu eingerichtet ist, Betriebsanweisungen von einem externen Verwaltungssystem zu empfangen. Hierbei können selbstverständlich neben dem Antriebssystem noch weitere Komponenten des Transportfahrzeugs durch die Steuereinheit anhand von eingegebenen Betriebsanweisungen angesteuert werden, beispielsweise die Handhabungseinheit und/oder eine Vorrichtung zum Drehen des Regalabschnitts gegenüber dem Fahrzeugkörper.

Um die Flexibilität des mobilen Transportfahrzeugs weiter zu steigern, kann dieses modular aufgebaut sein und wenigstens ein erstes Modul, welches den Regalabschnitt und den Handhabungsabschnitt umfasst, sowie ein zweites Modul umfassen, welches von dem ersten Modul lösbar ist und beispielsweise eine Steuereinheit, eine Antriebseinheit und/oder eine Energieversorgungseinheit umfassen kann. Auf diese Weise können beispielsweise vereinheitlichte zweite Module verwendet werden, welche das oben bereits angesprochene Antriebssystem sowie die entsprechende Steuereinheit umfassen, während für unterschiedliche Einsatzzwecke unterschiedliche erste Module vorgesehen werden können, welche sich beispielsweise durch die Bauweise ihres Regalabschnitts untereinander unterscheiden können.

Weiterhin umfasst das in dem erfindungsgemäßen Verfahren eingesetzte Lagerhaltungssystemneben dem mobilen Transportfahrzeug wie eben beschrieben ein stationäres Regal, welches hinsichtlich seiner Maße auf den Regalabschnitt des Transportfahrzeugs abgestimmt ist, um eine gleichzeitige Übergabe einer Mehrzahl von Objekten zwischen dem stationären Regal und dem Regalabschnitt des Transportfahrzeugs zu ermöglichen.

Insbesondere können hierbei Objektträger des stationären Regals jeweils mit einem Vorsprung zum Einhängen eines entsprechenden Objekts bereitgestellt sein.

Gemäß einer zweiten Alternative der Erfindung, zusätzlich oder alternativ zu der ersten Alternative der Erfindung, umfasst das Lagerhaltungssystem eine Hubeinheit, welche dazu eingerichtet ist, das stationäre Regal wenigstens abschnittsweise in vertikaler Richtung zu verlagern, um so eine Übernahme oder Übergabe einer Mehrzahl von Objekten zu vereinfachen, insbesondere in Ausführungsformen, in welchen das entsprechende Transportfahrzeug nicht über eine Hubeinheit zum Verlagern ihres Regalabschnitts verfügt. Hierbei bezieht sich die "abschnittsweise Verlagerung" darauf, dass zu es diesem Zweck ausreichend sein kann, beispielsweise lediglich entsprechende Objektträger des stationären Regals zu verlagern, beispielsweise Regalböden.

Dementsprechend betrifft die vorliegende Erfindung ein Verfahren zum Übergeben einer Mehrzahl von Objekten zwischen einem mobilen Transportfahrzeug und einem stationären Regal in einem erfindungsgemäßen Lagerhaltungssystem, umfassend die Schritte eines Positionierens des mobilen Transportfahrzeugs in einer geeigneten Ausrichtung zu dem stationären Regal und eines vertikalen Verlagerns des stationären Regals oder des Regalabschnitts des mobilen Transportfahrzeugs, um die Mehrzahl von Objekten an entsprechende Objektträger zu übergeben.

Dieses Verfahren kann ferner ein dem Übergeben der Mehrzahl von Objekten vorgelagertes oder nachgelagertes Handhaben von wenigstens einem der Objekte mittels der Handhabungseinheit umfassen. Alternativ könnten die Objekte in dem Regalabschnitt des mobilen Transportfahrzeugs jedoch selbstverständlich auch manuell gehandhabt, beispielsweise entnommen oder eingesetzt, werden.

Weitere Merkmale und Vorteile der vorliegenden Erfindung werden aus der nachfolgenden Beschreibung zweier Ausführungsformen deutlich, wenn diese zusammen mit den beiliegenden Figuren betrachtet wird. Diese zeigen im Einzelnen:
Fig. 1 eine erste Gestaltung eines Lagerhaltungssystems zur Verwendung in einem erfindungsgemäßen Verfahren in einer isometrischen Ansicht von schräg vorne; und
Fig. 2 eine isometrische Ansicht einer zweiten Gestaltung eines Lagerhaltungssystems von schräg hinten.

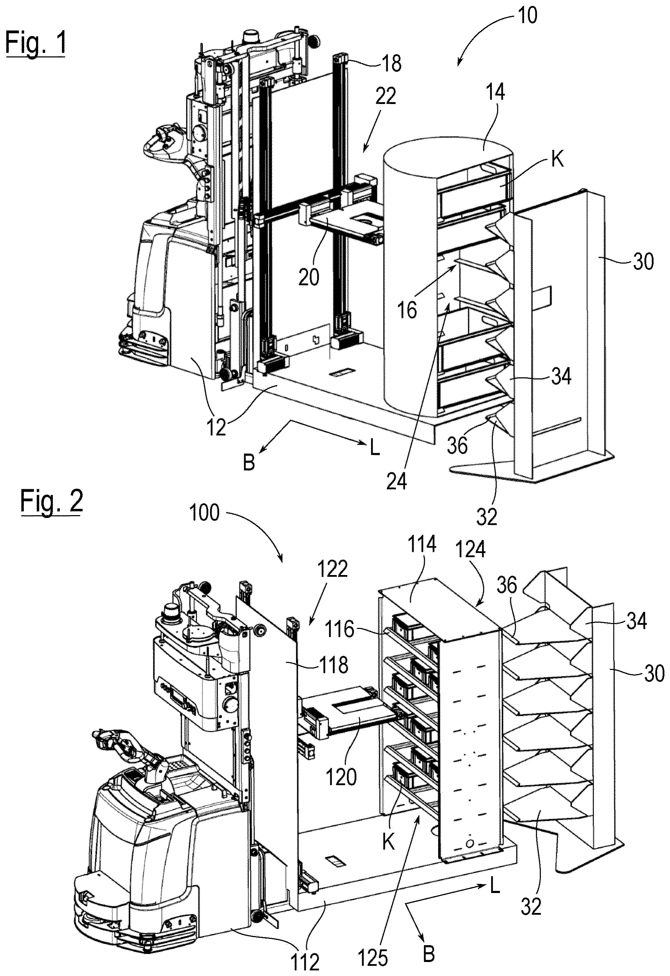

In Figur 1 ist zunächst eine erste Gestaltung eines Transportfahrzeugs zur Verwendung in einem erfindungsgemäßen Verfahren gezeigt und ganz allgemein mit dem Bezugszeichen 10 bezeichnet. Das mobile Transportfahrzeug 10 ist als sogenanntes fahrerloses Transportfahrzeug (FTF, auch unter dem englischen Begriff automated guided vehicle - AGV bekannt) ausgeführt und umfasst hierzu im Bereich seines Fahrzeugkörpers 12 entsprechende Komponenten, welche in der Darstellung aus Figur 1 nicht zu erkennen sind.

Insbesondere sind eine Steuereinheit und eine Kommunikationseinheit in einer betriebsmäßig gekoppelten Weise vorgesehen, welche es gemeinschaftlich erlauben, Betriebsanweisungen von einem externen Verwaltungssystem übermittelt zu bekommen und entsprechende Komponenten des Transportfahrzeugs 10 anzusteuern, unter anderem ein Antriebssystem, welches auf die durch den Fahrzeugkörper 12 in der Ansicht aus Figur 1 verdeckten Räder des mobilen Transportfahrzeugs 10 wirkt, um eine Fortbewegung des Fahrzeugs 10 auf einem Fahruntergrund zu erreichen. Hierbei ist die prinzipielle Haupt-Fortbewegungsrichtung des mobilen Transportfahrzeugs 10 identisch mit der Längsrichtung L des Fahrzeugkörpers 12, während in Figur 1 ebenfalls noch die Breitenrichtung B des Fahrzeugs 10 angedeutet ist.

Sich im Wesentlichen vertikal von dem Fahrzeugkörper 12 erstreckend befindet sich im bezüglich der Längsrichtung L vordersten Teil des mobilen Transportfahrzeugs 10 ein Regalabschnitt 14, welcher eine Mehrzahl von vertikal übereinander angeordneten, gleich voneinander beabstandeten Regalböden 16 als Objektträger umfasst. Hierbei sind die Regalböden 16 dazu bestimmt, Objekte K, wie beispielsweise Kleinlandungsträger, aufzunehmen, die dann wiederum einzelne Kleinteile beherbergen können. Wie in der Figur 1 zu erkennen ist, sind hierbei die Regalböden 16 nicht durchgehend ausgebildet, sondern in ihrem zentralen Bereich durchbrochen, um den weiter unten beschriebenen Entnahmevorgang mehrerer Objekte K zu ermöglichen.

In Längsrichtung L hinter dem Regalabschnitt 14 erstreckt sich ebenfalls im Wesentlichen vertikal von dem Fahrzeugkörper 12 eine als Hubgerüst 18 mit einem daran sowohl in vertikaler als auch in Breitenrichtung B beweglichen Lastaufnahmemittel 20 ausgeführte Handhabungseinheit, welche insgesamt mit dem Bezugszeichen 22 bezeichnet ist.

Da der Regalabschnitt 14 um eine in vertikaler Richtung verlaufende Schwenkachse 14 um wenigstens 180° drehbar mit dem Fahrzeugkörper 12 verbunden ist, ist es möglich, die erste Zugangsöffnung 24, durch welche ein Zugriff auf die auf den Regalböden 16 aufgenommenen Objekte K möglich ist, derart zu drehen, dass diese Zugangsöffnung 24 ebenfalls zu der Handhabungseinheit 22 weisen kann. Somit kann in diesem in den Figuren nicht dargestellten Zustand durch die Handhabungseinheit 22 selektiv auf einzelne der Objekte K zugegriffen werden und diese können auf entsprechende Regalböden 16 aufgestellt oder von diesen entnommen werden. Indem das Lastaufnahmemittel 20 ferner in Breitenrichtung B gegenüber dem Hubgerüst 18 verlagerbar ist, kann ferner ein derart aus- oder einzulagernder Gegenstand K von dem Fahrzeugkörper 12 aus gesehen nach außen verlagert werden, wo leichter auf ihn zugegriffen werden kann.

Demhingegen kann in der in Figur 1 gezeigten Orientierung des Regalabschnitts 14 von vorne her durch die Zugangsöffnung 24 auf die auf den Regalböden 16 aufliegenden Objekte K zugegriffen werden, insbesondere mittels des einen Teil des Lagerhaltungssystems bildenden stationären Regals 30, welches komplementär zu den Regalböden 16 des Regalabschnitts 14 des Transportfahrzeugs 10 ebenfalls eine Mehrzahl von Regalböden 32 als Objektträger aufweist, welche in einer Weise zulaufend und durch Seitenbleche 34 eingefasst sind, dass die Regalböden 32 in die Durchbrechungen der Regalböden 16 einfahren können, wodurch es erlaubt wird, dass das externe Regal 30 und der Regalabschnitt 16 des Transportfahrzeugs 10 ineinandergreifen und sich in einer Draufsicht überlappen. Ferner sind die Regalböden 32 mit jeweiligen Vorsprüngen 36 versehen, welche zum Einhängen eines entsprechenden Objekts K dienen.

Hierbei ist bei einem derartigen Zusammenfahrvorgang zu beachten, dass die vertikale Ausrichtung der jeweiligen Regalböden 16 und 32 zueinander ebenso wie die Ausrichtung in Breitenrichtung B des Transportfahrzeugs 10 mit hoher Präzision eingehalten werden muss. Hierzu kann beispielsweise im Bereich des Regalabschnitts 14 wenigstens eine in Figur 1 nicht dargestellte Sensoreinheit vorgesehen sein, welche den Bereich vor der Regaleinheit 14 erfasst und zur Feineinstellung der Ausrichtung des Transportfahrzeugs 10 und des stationären Regals 30 beitragen kann.

Die in Figur 2 gezeigte zweite Gestaltung eines fahrerlosen Transportfahrzeugs 100 unterscheidet sich von dem in Figur 1 gezeigten Transportfahrzeug lediglich hinsichtlich der Gestaltung ihres Regalabschnitts 114, weswegen zur Beschreibung sämtlicher weiterer Komponenten auf die entsprechende Beschreibung der Ausführungsform aus Figur 1 verwiesen sein soll und in Figur 2 sämtliche entsprechenden Komponenten mit gleichen Bezugszeichen, erhöht um 100, bezeichnet sind. Ebenso kann das externe Regal 30 in gleicher Weise wie in Figur 1 mit dem Transportfahrzeug 100 gemeinsam eingesetzt werden, so dass in Figur 2 dieses Regal 30 erneut dargestellt ist.

Der Regalabschnitt 114 des Fahrzeugs 100 ist derart aufgebaut, dass er auch ohne ein Drehen davon von beiden Seiten zugänglich, so dass insbesondere der Zugangsöffnung 124 eine weitere Zugangsöffnung 125 gegenüberliegt, durch welche hindurch die Handhabungseinheit 122 stets Zugriff auf die auf den Regalböden 116 aufgenommenen Objekte K hat, so dass ein Durchreichen der Objekte K durch den Regalabschnitt 114 von hinten nach vorne und umgekehrt möglich ist und der Regalabschnitt 114 drehfest mit dem Fahrzeugkörper 112 verbunden sein kann.

Der Vollständigkeit halber sei noch angesprochen, dass anstelle der in den Figuren 1 und 2 gezeigten Ausführungsformen von Handhabungseinheiten 22 und 122 beispielsweise auch Roboterarme zum Einsatz kommen könnten, insbesondere auch zusammen mit Hubgerüsten, welche die Basis der entsprechenden Arme dann vertikal und ggf. in Breitenrichtung B des entsprechenden Fahrzeugs verlagern könnten, während der eigentliche Ein- und Auslagervorgang von den Arm gemäß seinen Freiheitsgraden ausgeführt würde.

## Patentansprüche

1. Verfahren zum Übergeben einer Mehrzahl von Objekten (K) zwischen einem mobilen Transportfahrzeug (10; 100) und einem stationären Regal (30) in einem Lagerhaltungssystem, umfassend das mobile Transportfahrzeug (10; 100), umfassend:
- einen Fahrzeugkörper (12; 112) mit einer Längs- und einer Breitenrichtung (L, B), welcher mit einer Mehrzahl von Rädern bereitgestellt ist, mittels welcher sich das Transportfahrzeug (10; 100) auf einem Fahruntergrund fortbewegen kann, wobei die Haupt-Fortbewegungsrichtung des Transportfahrzeugs (10; 100) der Längsrichtung (L) des Fahrzeugkörpers (12; 112) entspricht;
- einen Regalabschnitt (14; 114) mit einer Mehrzahl von Objektträgern (16; 116), welcher dazu eingerichtet ist, eine Mehrzahl gleicher oder ähnlicher Objekte (K) aufzunehmen, wobei der Regalabschnitt (14; 114) derart angeordnet oder anordenbar ist, dass eine erste Zugangsöffnung (24; 124) zum Einsetzen und Entnehmen der Objekte (K) in Richtung der Vorderseite des Transportfahrzeugs (10; 100) auf die Längsrichtung (L) bezogen weist; und
- eine Handhabungseinheit (22; 122), welche dazu eingerichtet ist, selektiv ein einzelnes beliebiges der Objekte (K) aus dem Regalabschnitt (14; 114) zu übernehmen und welche hierzu bezüglich der Längsrichtung (L) des Transportfahrzeugs (10; 100) hinter dem Regalabschnitt (14; 114) angeordnet ist,
wobei der Regalabschnitt (114) eine weitere, der Handhabungseinheit (122) zugängliche Zugangsöffnung (125) gegenüber der ersten Zugangsöffnung (124) aufweist, oder der Regalabschnitt (14) derart anordenbar ist, dass die erste Zugangsöffnung (24) der Handhabungseinheit (22) zugänglich wird,
wobei das Lagerhaltungssystem ferner ein stationäres Regal (30) umfasst,
wobei ferner das mobile Transportfahrzeug (10; 100) eine Hubeinheit umfasst, welche dazu eingerichtet ist, den Regalabschnitt (14; 114) gegenüber den Rädern in vertikaler Richtung zu verlagern und/oder
wobei ferner des Lagerhaltungssystem eine Hubeinheit umfasst, welche dazu eingerichtet ist, das stationäre Regal (30) wenigstens abschnittsweise in vertikaler Richtung zu verlagern;
das Verfahren **dadurch gekennzeichnet, dass** das stationäre Regal (30) hinsichtlich seiner Maße auf den Regalabschnitt (14; 114) des Transportfahrzeugs (10; 100) abgestimmt ist, um eine gleichzeitige Übergabe einer Mehrzahl von Objekten (K) zwischen dem stationären Regal (30) und dem Regalabschnitt (14; 114) des Transportfahrzeugs (10; 100) zu ermöglichen, und
dass das Verfahren die folgenden Schritte umfasst:
- Positionieren des mobilen Transportfahrzeugs (10; 100) in einer geeigneten Ausrichtung zu dem stationären Regal (30); und
- Vertikales Verlagern des stationären Regals (30) oder des Regalabschnitts (14; 114) des mobilen Transportfahrzeugs (10; 100), um die Mehrzahl von Objekten an entsprechende Objektträger (16; 116; 32) zu übergeben.

2. Verfahren nach Anspruch 1,
wobei die Handhabungseinheit (22; 122) des mobilen Transportfahrzeugs (10; 100) ein Hubgerüst (18; 118) umfasst, welchem ein Lastaufnahmemittel (20; 120) in einer verlagerbaren Weise zugeordnet ist.

3. Verfahren nach Anspruch 2,
wobei das Lastaufnahmemittel (20; 120) des mobilen Transportfahrzeugs (10; 100) ferner dazu eingerichtet ist, eine Bewegung in Richtung der Breitenrichtung (B) des Transportfahrzeugs (10; 100) ausführen zu können.

4. Verfahren nach einem der vorhergehenden Ansprüche,
wobei die Handhabungseinheit des mobilen Transportfahrzeugs (10; 100) einen Roboterarm mit mehreren Freiheitsgraden umfasst.

5. Verfahren nach einem der vorhergehenden Ansprüche,
wobei der Regalabschnitt (14) des mobilen Transportfahrzeugs (10; 100) gegenüber dem Fahrzeugkörper (12) um wenigstens 180° drehbar angeordnet ist.

6. Verfahren nach einem der vorhergehenden Ansprüche,
wobei der Regalabschnitt (14; 114) des mobilen Transportfahrzeugs (10; 100) mehrere gleich voneinander beabstandeter Objektträger (16; 116) umfasst.

7. Verfahren nach einem der vorhergehenden Ansprüche, das mobile Transportfahrzeug (10; 100)
ferner umfassend wenigstens eine Sensoreinheit, welche dazu eingerichtet ist, die Umgebung des Transportfahrzeugs (10; 100) zu erfassen, insbesondere im Bereich vor dem Regalabschnitt (14; 114) bezüglich der Längsrichtung (L).

8. Verfahren nach einem der vorhergehenden Ansprüche, das mobile Transportfahrzeug (10; 100)
ferner umfassend eine Steuereinheit, welche dazu eingerichtet ist, ein auf die Räder wirkendes Antriebssystem des Transportfahrzeugs (10; 100) für einen automatischen oder autonomen Betrieb anzusteuern, und hierzu mit einer Kommunikationseinheit betriebsmäßig gekoppelt ist, welche dazu eingerichtet ist, Betriebsanweisungen von einem externen Verwaltungssystem zu empfangen.

9. Verfahren nach einem der vorhergehenden Ansprüche,
wobei das Transportfahrzeug (10; 100) modular aufgebaut ist und wenigstens ein erstes Modul, welches den Regalabschnitt (14; 114) und die Handhabungseinheit (22; 122) umfasst, sowie ein zweites Modul umfasst, welches von dem ersten Modul lösbar ist.

10. Verfahren nach einem der vorhergehenden Ansprüche,
wobei Objektträger (32) des stationären Regals (30) jeweils mit einem Vorsprung (36) zum Einhängen eines entsprechenden Objekts (K) bereitgestellt sind.

11. Verfahren nach einem der vorhergehenden Ansprüche,
ferner umfassend ein dem Übergeben der Mehrzahl von Objekten (K) vorgelagertes oder nachgelagertes Handhaben von wenigstens einem der Objekte (K) mittels der Handhabungseinheit (22; 122).

## Claims

1. Method for transferring a plurality of objects (K) between a mobile transport vehicle (10; 100) and a stationary rack (30) in a storage system, comprising the mobile transport vehicle (10; 100), comprising:
- a vehicle body (12; 112) having a longitudinal direction and a width direction (L, B), which is provided with a plurality of wheels by means of which the transport vehicle (10; 100) is able to move on a ground surface, wherein the main direction of travel of the transport vehicle (10; 100) corresponds to the longitudinal direction (L) of the vehicle body (12; 112);
- a rack section (14; 114) having a plurality of object carriers (16; 116), which is configured to receive a plurality of identical or similar objects (K), wherein the rack section (14; 114) is arranged or arrangeable such that a first access opening (24; 124) for inserting and removing the objects (K) faces in the direction of the front side of the transport vehicle (10; 100) with respect to the longitudinal direction (L); and
- a handling unit (22; 122), which is configured to selectively take over any single individual one of the objects (K) from the rack section (14; 114) and which is arranged behind the rack section (14; 114) with respect to the longitudinal direction (L) of the transport vehicle (10; 100), wherein the rack section (114) has a further access opening (125), which is accessible to the handling unit (122), opposite the first access opening (124), or the rack section (14) is arrangeable such that the first access opening (24) becomes accessible to the handling unit (22),
wherein the storage system further comprises a stationary rack (30),
wherein the mobile transport vehicle (10; 100) further comprises a lifting unit, which is configured to displace the rack section (14; 114) relative to the wheels in the vertical direction, and/or
wherein the storage system further comprises a lifting unit, which is configured to displace the stationary rack (30) at least in sections in the vertical direction;
the method **characterized in that** the stationary rack (30) is dimensioned to match the rack section (14; 114) of the transport vehicle (10; 100) so as to enable a simultaneous transfer of a plurality of objects (K) between the stationary rack (30) and the rack section (14; 114) of the transport vehicle (10; 100), and
**in that** the method comprises the following steps:
- positioning the mobile transport vehicle (10; 100) in a suitable orientation relative to the stationary rack (30); and
- vertically displacing the stationary rack (30) or the rack section (14; 114) of the mobile transport vehicle (10; 100) in order to transfer the plurality of objects to corresponding object carriers (16; 116; 32).

2. Method according to claim 1,
wherein the handling unit (22; 122) of the mobile transport vehicle (10; 100) comprises a lifting mast (18; 118) to which a load-receiving means (20; 120) is assigned in a displaceable manner.

3. Method according to claim 2,
wherein the load-receiving means (20; 120) of the mobile transport vehicle (10; 100) is further configured to be able to perform a movement in the direction of the width direction (B) of the transport vehicle (10; 100).

4. Method according to any one of the preceding claims,
wherein the handling unit of the mobile transport vehicle (10; 100) comprises a robot arm with multiple degrees of freedom.

5. Method according to any one of the preceding claims,
wherein the rack section (14) of the mobile transport vehicle (10; 100) is arranged so as to be rotatable relative to the vehicle body (12) by at least 180°.

6. Method according to any one of the preceding claims,
wherein the rack section (14; 114) of the mobile transport vehicle (10; 100) comprises a plurality of object carriers (16; 116) equally spaced from one another.

7. Method according to any one of the preceding claims, the mobile transport vehicle (10; 100) further comprising at least one sensor unit, which is configured to detect the surroundings of the transport vehicle (10; 100), in particular in the region in front of the rack section (14; 114) with respect to the longitudinal direction (L).

8. Method according to any one of the preceding claims, the mobile transport vehicle (10; 100) further comprising a control unit, which is configured to control a drive system of the transport vehicle (10; 100) acting on the wheels for automatic or autonomous operation, and which is operatively coupled to a communication unit, which is configured to receive operating instructions from an external management system.

9. Method according to any one of the preceding claims,
wherein the transport vehicle (10; 100) is of modular construction and comprises at least a first module, which comprises the rack section (14; 114) and the handling unit (22; 122), and a second module, which is detachable from the first module.

10. Method according to any one of the preceding claims,
wherein object carriers (32) of the stationary rack (30) are each provided with a projection (36) for suspending a corresponding object (K).

11. Method according to any one of the preceding claims,
further comprising handling of at least one of the objects (K) by means of the handling unit (22; 122) before or after the transferring of the plurality of objects (K).

## Revendications

1. Procédé de transfert d'une pluralité d'objets (K) entre un véhicule de transport mobile (10 ; 100) et un rayonnage stationnaire (30) dans un système de stockage, comprenant le véhicule de transport mobile (10 ; 100), comprenant :
• un corps de véhicule (12 ; 112) ayant une direction longitudinale et une direction transversale (L, B), lequel est pourvu d'une pluralité de roues au moyen desquelles le véhicule de transport mobile (10 ; 100) peut se déplacer sur un sol de roulement, la direction principale de déplacement du véhicule de transport mobile (10 ; 100) correspondant à la direction longitudinale (L) du corps de véhicule (12 ; 112) ;
• une section de rayonnage (14 ; 114) ayant une pluralité de supports d'objet (16 ; 116), laquelle est configurée pour recevoir une pluralité d'objets (K) identiques ou similaires, la section de rayonnage (14 ; 114) étant disposée ou pouvant être disposée de telle sorte qu'une première ouverture d'accès (24 ; 124) pour l'insertion et le retrait des objets (K) est orientée vers le côté avant du véhicule de transport mobile (10 ; 100) par rapport à la direction longitudinale (L) ; et
• une unité de manipulation (22 ; 122), laquelle est configurée pour prendre de manière sélective un objet (K) quelconque individuel à partir de la section de rayonnage (14 ; 114) et laquelle est disposée à cet effet derrière la section de rayonnage (14 ; 114) par rapport à la direction longitudinale (L) du véhicule de transport mobile (10 ; 100), la section de rayonnage (114) présentant une autre ouverture d'accès (125) accessible à l'unité de manipulation (122) à l'opposé de la première ouverture d'accès (124), ou la section de rayonnage (14) pouvant être disposée de telle sorte que la première ouverture d'accès (24) devient accessible à l'unité de manipulation (22),
le système de stockage comprenant en outre un rayonnage stationnaire (30),
le véhicule de transport mobile (10 ; 100) comprenant en outre une unité de levage qui est configurée pour déplacer la section de rayonnage (14 ; 114) par rapport aux roues dans une direction verticale, et/ou
le système de stockage comprenant en outre une unité de levage qui est configurée pour déplacer le rayonnage stationnaire (30) au moins par sections dans une direction verticale ;
le procédé étant **caractérisé en ce que** le rayonnage stationnaire (30) est adapté en termes de dimensions à la section de rayonnage (14 ; 114) du véhicule de transport mobile (10 ; 100) afin de permettre un transfert simultané d'une pluralité d'objets (K) entre le rayonnage stationnaire (30) et la section de rayonnage (14 ; 114) du véhicule de transport mobile (10 ; 100), et
**en ce que** le procédé comprend les étapes suivantes :
• positionner le véhicule de transport mobile (10 ; 100) dans une orientation appropriée par rapport au rayonnage stationnaire (30) ; et
• déplacer verticalement le rayonnage stationnaire (30) ou la section de rayonnage (14 ; 114) du véhicule de transport mobile (10 ; 100) pour transférer la pluralité d'objets à des supports d'objet (16 ; 116 ; 32) correspondants.

2. Procédé selon la revendication 1,
dans lequel l'unité de manipulation (22 ; 122) du véhicule de transport mobile (10 ; 100) comprend un mât de levage (18 ; 118) auquel un moyen de prise de charge (20 ; 120) est associé de manière déplaçable.

3. Procédé selon la revendication 2,
dans lequel le moyen de prise de charge (20 ; 120) du véhicule de transport mobile (10 ; 100) est en outre configuré pour pouvoir effectuer un mouvement dans la direction transversale (B) du véhicule de transport mobile (10 ; 100).

4. Procédé selon l'une des revendications précédentes,
dans lequel l'unité de manipulation du véhicule de transport mobile (10 ; 100) comprend un bras de robot à plusieurs degrés de liberté.

5. Procédé selon l'une des revendications précédentes,
dans lequel la section de rayonnage (14) du véhicule de transport mobile (10 ; 100) est disposée de manière rotative d'au moins 180° par rapport au corps de véhicule (12).

6. Procédé selon l'une des revendications précédentes,
dans lequel la section de rayonnage (14 ; 114) du véhicule de transport mobile (10 ; 100) comprend plusieurs supports d'objet (16 ; 116) espacés les uns des autres de manière égale.

7. Procédé selon l'une des revendications précédentes,
le véhicule de transport mobile (10 ; 100) comprenant en outre au moins une unité de détection, laquelle est configurée pour détecter l'environnement du véhicule de transport mobile (10 ; 100), en particulier dans la zone située devant la section de rayonnage (14 ; 114) par rapport à la direction longitudinale (L).

8. Procédé selon l'une des revendications précédentes,
le véhicule de transport mobile (10 ; 100) comprenant en outre une unité de commande, laquelle est configurée pour commander un système d'entraînement du véhicule de transport mobile (10 ; 100) agissant sur les roues pour un fonctionnement automatique ou autonome, et est couplée de manière opérationnelle à cet effet à une unité de communication qui est configurée pour recevoir des instructions de service en provenance d'un système de gestion externe.

9. Procédé selon l'une des revendications précédentes,
dans lequel le véhicule de transport mobile (10 ; 100) est conçu de manière modulaire et comprend au moins un premier module, lequel comprend la section de rayonnage (14 ; 114) et l'unité de manipulation (22 ; 122), ainsi qu'un deuxième module, lequel est détachable du premier module.

10. Procédé selon l'une des revendications précédentes,
dans lequel des supports d'objet (32) du rayonnage stationnaire (30) sont pourvus chacun d'une saillie (36) pour l'accrochage d'un objet (K) correspondant.

11. Procédé selon l'une des revendications précédentes,
comprenant en outre une manipulation d'au moins l'un des objets (K), préalablement ou postérieurement au transfert de la pluralité d'objets (K), au moyen de l'unité de manipulation (22 ; 122).
